# FASCICULE DE BREVET EUROPEEN

(11) **EP 3 418 588 B1**
(45) Date de publication et mention de la délivrance du brevet: **30.10.2019**
(21) Numéro de dépôt: 18177449.8
(22) Date de dépôt: 13.06.2018
(51) Int. Cl.: F16B 2/06, F16B 5/02, F16B 2/00

(54) **SYSTÈME DE FIXATION À TENONS POURVUS D'APPENDICES DÉCALÉS ANGULAIREMENT**
BEFESTIGUNGSSYSTEM MIT ZAPFEN, DAS MIT WINKLIG VERSCHOBENEN ANHÄNGEN AUSGESTATTET IST
LUG FASTENING SYSTEM WITH ANGULAR OFFSET APPENDAGES

(30) Priorité: 23.06.2017 FR 1755737
(43) Date de publication de la demande: 26.12.2018
(73) Titulaire: Airbus Operations S.A.S., 31060 Toulouse (FR)
(72) Inventeur: PHALIPPOU, Jérôme, 31170 TOURNEFEUILLE (FR)
(74) Mandataire: Gicquel, Olivier Yves Gérard

(56) Documents cités:
- CN-A- 103 625 631
- US-A- 1 247 642
- US-A- 1 281 531
- US-A1- 2011 089 292

## Description

La présente invention concerne le domaine des systèmes mécaniques de fixation pour l'assemblage de deux pièces. La présente invention s'applique notamment aux pièces d'aéronef.

### DOMAINE TECHNIQUE

La présente invention s'intéresse aux systèmes de fixation permettant d'assembler et désassembler rapidement deux pièces sans nécessiter de perçage ou d'ajustement.

De très nombreuses applications sont possibles. L'une d'entre elles est l'assemblage de structures dans un aéronef et par exemple dans un fuselage d'aéronef. En effet, la plupart des structures actuelles sont mises en place et maintenues sur le fuselage par des systèmes nécessitant d'être rivetés obligeant ainsi à effectuer des opérations d'usinage d'orifices de fixation. Or il est souhaité aujourd'hui d'éviter toute opération d'usinage dans l'aéronef pendant l'assemblage et de prévoir des orifices préalablement usinés.

Cependant, du fait d'avoir réalisé au préalable ces orifices, il s'en suit des difficultés pour garantir qu'ils s'aligneront avec une précision suffisante pour assurer un assemblage satisfaisant.

### EXPOSÉ DE L'INVENTION

Le brevet FR2872782 déposée par AIRBUS France décrit des moyens de fixation d'un plancher comportant une pluralité de longerons et traverses sur un fuselage d'aéronef. Les moyens de fixation comprennent notamment des bielles associées au fuselage à l'aide d'une ferrure fixée par rivetage.

Un dispositif de liaison mécanique comprenant deux tenons s'étendant chacun depuis des faces opposées d'une plaque intercalaire est connu par GB 1,247,642. La présente invention a pour but de proposer une alternative permettant de pallier au problème d'assemblage de deux pièces nécessitant des opérations d'usinage indésirables.

### EXPOSE DE l'INVENTION

Pour ce faire, la présente invention propose un dispositif de liaison mécanique entre deux pièces caractérisé en ce qu'il comprend deux tenons s'étendant chacun depuis des faces opposées d'une plaque intercalaire, chacun des tenons présentant deux appendices formant bras de couplage, chaque appendice étant positionné de part et d'autre du tenon, les appendices d'un tenon étant positionnées dans une direction longitudinale différente des appendices de l'autre tenon, chacun des appendices présentant des moyens de couplage à un dispositif de verrouillage des tenons.

Le dispositif de liaison mécanique présente au moins l'une des caractéristiques optionnelles suivantes, prises isolément ou en combinaison.

Les appendices d'un tenon se trouvent dans des directions longitudinales formant un angle de sensiblement 90 degrés avec les appendices de l'autre tenon.

La plaque intercalaire comprend une partie élastique.

La partie élastique est prise en sandwich entre deux parties plus rigides.

Les moyens de couplage se présentent sous la forme d'un filetage des appendices.

La plaque intercalaire est en deux parties séparables.

Chaque tenon se présente sous une forme parallélépipédique et chaque appendice sous une forme cylindrique.

La présente invention concerne également un système de fixation comprenant un dispositif de liaison mécanique avec les caractéristiques présentées précédemment et deux ferrures présentant chacune une rainure dans laquelle chacun des tenons du dispositif de liaison est susceptible de s'engager, chaque appendice dépassant à l'extérieur et de part et d'autre de la rainure, la rainure d'une ferrure étant positionnée selon une direction longitudinale différente de la rainure de l'autre ferrure.

Le système de fixation présente au moins l'une des caractéristiques optionnelles suivantes, prises isolément ou en combinaison.

La rainure est formée par une cavité entre deux blocs faisant saillie par rapport à la ferrure.

Chaque bloc présente une face latérale sur laquelle s'appuie une rondelle, la face latérale présentant au moins partiellement des stries de forme correspondante à celle de la rondelle.

Chaque appendice se trouve dans une direction perpendiculaire aux faces latérales des blocs desquels elle dépasse.

Un écrou est prévu par appendice pour verrouiller la rondelle sur une face latérale des blocs correspondants.

Sur une même pièce, l'orientation de la rainure présente une direction alternée d'une ferrure à la ferrure voisine.

La présente invention concerne également un procédé de fixation de deux pièces l'une à l'autre à l'aide d'un système de fixation avec les caractéristiques présentées précédemment, caractérisé en ce qu'il comprend les étapes suivantes :
- positionner un tenon dans une ferrure ou inversement ;
- positionner l'autre tenon dans l'autre ferrure ou inversement ;
- fixer les ferrures sur les pièces correspondantes, la fixation de la ferrure pouvant intervenir avant ou après le positionnement du tenon ;
- verrouiller les tenons sur les ferrures à l'aide du dispositif de verrouillage.

Le procédé peut comprendre une étape d'assemblage des parties séparables.

### DESCRIPTION SOMMAIRE DES DESSINS

D'autres buts, avantages et caractéristiques de l'invention apparaîtront à la lecture de la description qui va suivre, description donnée à titre d'exemple non limitatif en référence aux dessins ci-annexés dans lesquels :
- la figure 1 montre une vue en perspective du système de fixation selon la présente invention entre deux pièces ;
- la figure 2 montre une vue en perspective du système de fixation représenté sur la figure 1 ;
- la figure 3 montre une vue en perspective du dispositif de liaison mécanique du système de fixation représenté sur les figures 1 et 2;
- la figure 4 montre une vue en perspective d'une alternative au dispositif de liaison mécanique du système de fixation représenté sur les figures 1 à 3 dans lequel la plaque intercalaire est séparable en deux parties ;
- la figure 5 montre une vue en perspective d'une ferrure du système de fixation représenté sur les figures 1 et 2 ;
- la figure 6 montre une vue partielle agrandie en perspective des stries formées sur les blocs de la ferrure représentée sur la figure 5;
- la figure 7 montre une vue en perspective d'une alternative au dispositif de liaison présenté sur les figures précédentes dans lequel le tenon est de forme cubique.

### MANIERE DE REALISER L'INVENTION

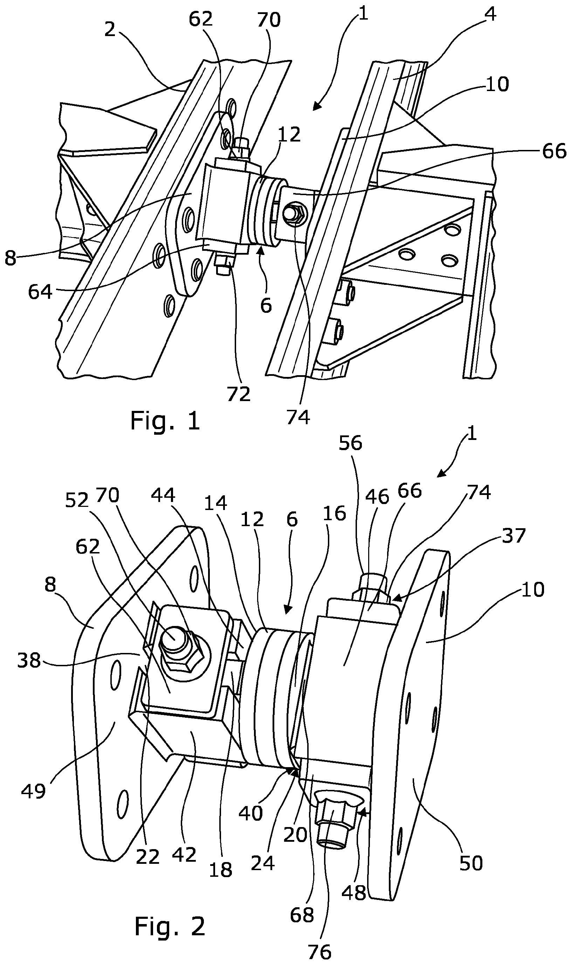

Comme montré sur la figure 1, le système 1 de fixation selon la présente invention permet d'assembler deux pièces 2 et 4 sans avoir besoin de percer ou ajuster ou caler au moment du montage.

Comme représenté sur les figures 1 et 2, le système 1 de fixation comprend un dispositif 6 de liaison mécanique associé à deux ferrures 8, 10 couplées respectivement à chacune des pièces 2 et 4. Le dispositif 6 de liaison mécanique comprend une plaque 12 intercalaire sur des faces 14, 16 opposées de laquelle se trouvent deux tenons respectivement 18, 20. Les tenons 18, 20 s'étendent depuis la plaque 12 dans une même direction mais dans des sens opposés.

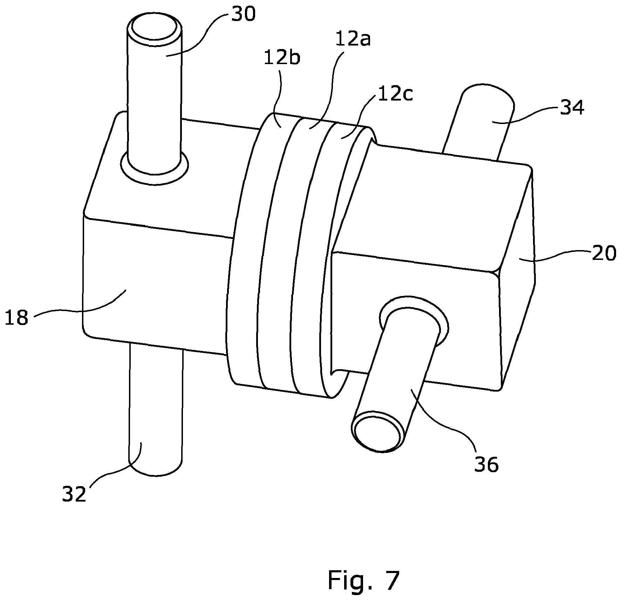

Comme montré sur les figures 1 à 4, les tenons 18, 20 forment saillie par rapport à la face respective 14, 16 de la plaque 12 intercalaire. Les tenons 18 respectivement 20 peuvent présenter tout type de forme permettant de réaliser la fonction attendue à savoir comme il sera vu plus loin, de pouvoir s'engager dans une rainure ou gorge 22, respectivement 24 de la ferrure associée à la pièce 2, respectivement 4 pour maintenir le tenon dans une position déterminée. Toute autre forme permettant l'engagement dans une rainure et un appui pour bloquer le dispositif est envisageable. Le tenon peut par exemple se présenter sous une forme cubique (voir figure 7) mais aussi sous toute autre forme pouvant présenter des courbures, des inclinaisons ou autres .... Chaque tenon 18, 20 dispose d'une face appelée face de base 18a, 20a par laquelle il est lié à la plaque 12 intercalaire.

Dans la forme de réalisation illustrée sur les figures 1 à 4, chaque tenon 18, 20 présente une forme parallélépipédique de section rectangulaire. La face 18a, 20a de base présente une forme rectangulaire dont la direction longitudinale correspond à celle de sa longueur. Les deux tenons parallélépipédiques sont décalés d'un angle de sensiblement 90 degrés. Plus précisément, cela signifie que le plan central de symétrie longitudinal du tenon 18 est sensiblement perpendiculaire au plan central de symétrie longitudinal du tenon 20. Chaque tenon 18, 20 présente 6 faces : une face de base 18a, 20a, une face libre 18b, 20b opposée à la face de base, deux faces principales 18c, 18d, 20c, 20d, deux faces latérales 18e, 18f, 20e, 20f. Les tenons 18, 20 sont fixés ou d'une seule pièce avec la plaque 12 intercalaire et sont liés à celle-ci par leur face 18a, 20a de base. Les faces 18c, 18d, 20c, 20d latérales des tenons sont de surface plane dans la forme illustrée mais pourrait être au moins partiellement convexe. Comme il sera vu plus loin, la convexité des faces latérales permet de rattraper un mauvais alignement entre l'ensemble des éléments et en particulier des pièces 2, 4 à assembler.

Dans la forme illustrée, la plaque 12 intercalaire présente une forme cylindrique de section circulaire. La plaque 12 pourrait présenter tout autre type de forme présentant deux faces 14, 16 permettant de porter chaque tenon 18, 20 de manière opposée par rapport à ladite plaque. Dans la forme de réalisation illustrée, les faces 14 et 16 sont parallèles mais elles pourraient ne pas l'être.

La plaque 12 peut être d'un seul bloc rigide ou comprendre une partie 12a élastique. La partie élastique se situe entre les deux faces 14, 16 portant les tenons. La partie 12a élastique de la plaque 12 intercalaire est susceptible d'être constituée de multiples manières par exemple par l'utilisation d'un matériau élastique mais elle pourrait également être réalisée à partir de ressorts, vérins ou tout autre mécanisme permettant d'offrir une zone élastique entre les tenons 18, 20 se trouvant en prise avec les pièces à assembler. La partie 12a élastique permet notamment d'absorber un mauvais alignement ou des tolérances entre tous les éléments permettant l'assemblage. La partie 12a élastique permet également de filtrer les vibrations transmises par la ou les pièces à assembler provenant d'un environnement vibratoire.

Dans la forme de réalisation illustrée, la plaque 12 comprend trois parties : deux disques extrémaux 12b, 12c et un disque 12a central. Les faces portant les tenons correspondent aux faces libres extrémales et opposées des disques 12b et 12c extrémaux. Les disques 12a, 12b, 12c sont des blocs cylindriques de section circulaire identiques formant ensemble la plaque 12 intercalaire d'un seul tenant ; le disque 12a central est fait d'un matériau élastique tel que par exemple un élastomère. Le disque 12a élastique est pris en sandwich entre les disques 12b et 12c. Les disques 12b, 12c sont faits d'un matériau rigide par exemple identique à celui des tenons.

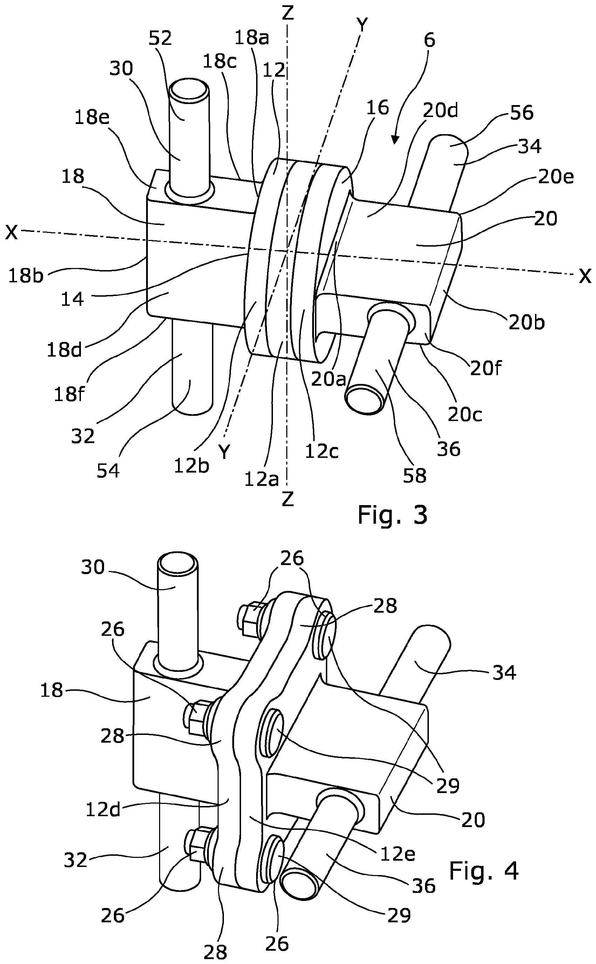

Selon une autre forme de réalisation possible illustrée sur la figure 4, la plaque 12 intercalaire peut comprendre deux parties 12d, 12e séparables pouvant être montées et démontées facilement et rapidement tout en assurant une jonction solide une fois montée pour assurer l'assemblage par des moyens dits d'assemblage. Le deux parties 12d, 12e peuvent comprendre ou pas des moyens permettant une fois la plaque 12 intercalaire montée d'offrir une partie 12a élastique présentant les caractéristiques exposées précédemment.

Dans le cas de deux parties 12d, 12e séparables, les moyens d'assemblage peuvent se présenter sous la forme d'un système de vis/écrou 26. Des orifices 29 sont pratiqués pour le passage et la fixation du système 26 de vis/écrou. Dans la forme de réalisation illustrée, des pattes 28 pourvus de l'orifice 29 pour le passage et la fixation du système 26 de vis/écrou sont prévus en saillie vers l'extérieur des parties 12d et 12e. Les pattes de la partie 12d d'une part et de la partie 12e d'autre part sont prévus en correspondance pour l'assemblage.

Dans le cas de deux parties 12d, 12e entre lesquels on prévoit une partie élastique 12a, l'orifice 29 des pattes 28 présente une forme permettant un débattement de la vis pour préserver l'aspect élastique de la partie 12a élastique. L'orifice pourrait par exemple présenter un profil oblong.

Dans la description qui suit, par convention, et comme illustré sur la figure 3, l'axe X-X correspond à l'axe central transversal des tenons 18, 20 et l'axe central de la plaque 12 intercalaire. L'axe Y-Y est un axe radial à la plaque 12, sur un même plan que l'axe central de symétrie longitudinal de la face de base du tenon 20, passant par l'axe X-X. L'axe Z-Z correspond à un axe passant par les axes X-X et Y-Y, sur un même plan que l'axe central de symétrie longitudinal de la face de base du tenon 18. Les trois axes X-X, Y-Y et Z-Z sont orthogonaux entre eux et leur intersection correspond au centre de la plaque 12 intercalaire.

Chaque tenon 18 respectivement 20 comprend deux appendices 30, 32 respectivement 34, 36 formant bras de couplage de part et d'autre du tenon. Les appendices respectivement (30, 32), (34, 36) s'étendent depuis les faces latérales respectivement (18e, 18f), (20e, 20f) dans une direction parallèle à la face de base dudit tenon soit dans la direction de l'axe Z-Z pour les appendices 30, 32 et dans la direction de l'axe Y-Y pour les appendices 34, 36. Chacun des appendices 30, 32, 34, 36 présente des moyens de couplage à un dispositif de verrouillage des tenons dans une direction perpendiculaire à la face de base des tenons et à la plaque 12 intercalaire, soit dans la direction de l'axe X-X.

Chaque appendice 30, 32, 34, 36 présente tout type de forme permettant d'offrir lesdits moyens de couplage. Les appendices sont fixés ou sont d'une seule pièce avec le tenon correspondant.

Dans la forme de réalisation illustrée, les appendices respectivement 30, 32, 34, 36 présentent une forme cylindrique de section circulaire dont le diamètre est de dimension inférieure à la largeur de la face latérale du tenon correspondant respectivement 18e, 18f, 20e, 20f. Dans la forme de réalisation illustrée, les axes des appendices 30 et 32, et, respectivement 34 et 36, sont confondus, parallèles à la plaque 12 et perpendiculaires aux faces latérales des tenons 18e, 18f respectivement 20e, 20f.

Les appendices 30, 32 (ou 34, 36) d'un même tenon pourraient ne pas être dans le prolongement l'un de l'autre. Ils pourraient également ne pas se trouver dans des directions parallèles à la face de base du tenon et à la plaque 12. Comme il sera vu plus loin, ils doivent se trouver dans une direction permettant l'association à un dispositif de verrouillage.

Comme vu précédemment, les tenons 18, respectivement 20 sont destinés à s'engager dans une rainure 22, respectivement 24 portée par la ferrure 8, respectivement 10 destinée elle-même à être fixée sur la pièce 2, respectivement 4 à assembler. Chaque rainure 22, respectivement 24 est constituée par une cavité 38, respectivement 40 formée entre deux blocs 42, 44 respectivement 46, 48 en saillie par rapport à la surface globale de la ferrure et dans la forme de réalisation illustrée, à une surface plane de la ferrure 8, respectivement 10. Dans la forme de réalisation illustrée, la ferrure présente une forme globale parallélépipédique de section rectangulaire et de hauteur faible par rapport à sa longueur et largeur pour présenter une forme globale de plaque. Les blocs 42, 44 respectivement 46, 48 font saillie par rapport à la surface plane 49, respectivement 50 principale de la plaque.

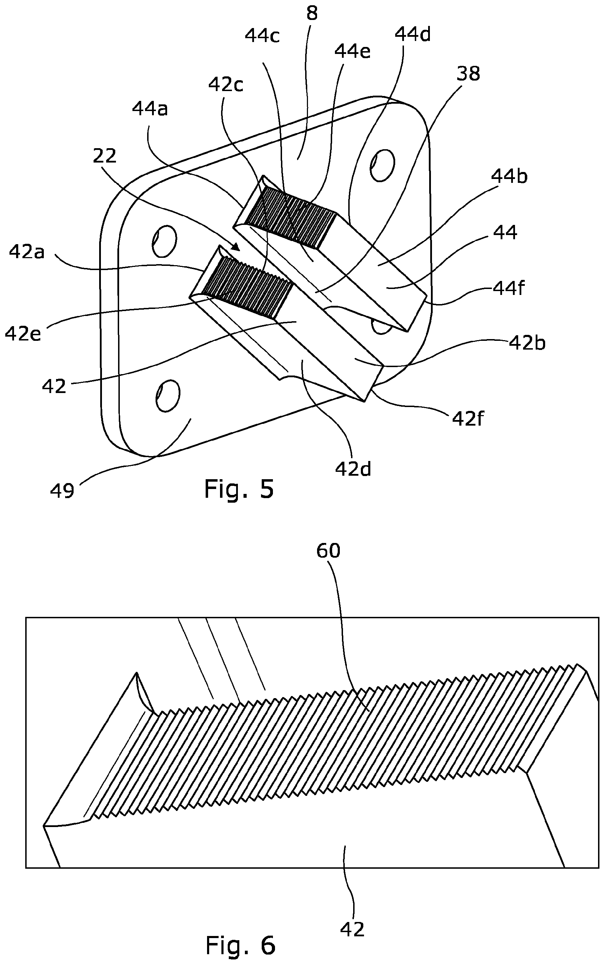

Une forme de réalisation des blocs de la ferrure 8 va être décrite en référence à la figure 5 sachant que tout ce qui est décrit pour les blocs de la ferrure 8 est applicable à ceux de la ferrure 10. Les blocs 42, 44 portés par la ferrure 8 sont de forme parallélépipédique de section rectangulaire de même dimension. Ils sont espacés l'un par rapport à l'autre et parallèles entre eux de manière à créer une cavité 38 de forme correspondante au tenon 18. Chaque bloc 42, 44 présente six faces : une face 42a, 44a de base, une face 42b, 44b libre opposée à la face 42a, 44a, une face 42c, 44c intérieure, une face 42d, 44d extérieure, deux faces 42e, 42f, 44e, 44f latérales. La face de base 42a, 44a est liée à la ferrure 8. Les faces 42b, 44b libres font face à la plaque 12 intercalaire lorsque le tenon 12 est engagé dans la rainure 22. La face 42c intérieure du bloc 42 est parallèle et fait face à la face 44c intérieure du bloc 44. Ces faces intérieures sont en contact avec le tenon 18 lorsqu'il est engagé dans la rainure 22. La face 42d, respectivement 44d extérieure est la face opposée à la face 42c, respectivement 44c intérieure. La dimension longitudinale des blocs 42, 44 qui correspond à la longueur de la face inférieure de base 42a, 44a est supérieure à celle du tenon 18 qui correspond à la longueur de la face de base 18a de manière que la cavité 38 reçoive partiellement les appendices 30, 32.

Comme illustré sur les figures 1 et 2, les appendices 30, 32 respectivement 34, 36 dépassent à l'extérieur de la cavité 38, respectivement 40 de part et d'autre de celle-ci, au-delà des faces latérales des blocs. Les extrémités 52, 54 respectivement 56, 58 des appendices 30, 32 respectivement 34, 36 dépassant à l'extérieur de la cavité 38, respectivement 40 permettent la mise en place d'un dispositif 37 de verrouillage du dispositif 6 de liaison pour maintenir le tenon 18, respectivement 20 en position à l'intérieur de la cavité 38, respectivement 40. Les extrémités des appendices et les faces latérales des blocs présentent des moyens de couplage au dispositif 37 de verrouillage. Le dispositif 37 de verrouillage permet de bloquer et libérer rapidement et facilement le dispositif 6 de liaison à l'intérieur de la rainure sans avoir à perforer une seule pièce.

Les moyens de couplage se présentent dans la forme de réalisation sous la forme d'un filetage des extrémités 52, 54, 56, 58 des appendices et de stries 60 sur les faces latérales des blocs. Les stries 60 sont formées d'une succession de creux et de relief de forme complémentaire à celles des stries réalisées sur une rondelle 62, 64, 66, 68. La rondelle 62, 64, 66, 68 présente une forme telle qu'elle recouvre au moins partiellement la surface des faces latérales des deux blocs de la ferrure. La surface de recouvrement de la rondelle sur les faces latérales à savoir les faces (42e, 42f), (44e, 44f) pour celles représentées sur la figure 5, doit être suffisante pour permettre à la rondelle de prendre suffisamment d'appui sur les blocs pour verrouiller le système de fixation comme il sera vu plus loin. La rondelle est dans la forme de réalisation illustrée parallélépipédique de section rectangulaire et sa longueur est telle que les extrémités de celle-ci correspondent avec les extrémités des faces extérieures des blocs. De cette manière, lorsque la rondelle (62, 64), respectivement (66, 68) est positionnée sur les blocs (42, 44), respectivement (46, 48) correspondants, les faces extrémales de la rondelle contiguës aux faces extérieures des blocs se trouvent au même niveau pour former une seule et même surface sans discontinuité. Cependant, les faces extrémales de la rondelle pourrait ne pas se trouver au même niveau que les faces extérieures des blocs. La largeur de la rondelle est inférieure à la longueur de la face latérale du bloc de manière à permettre de changer le positionnement de la rondelle d'une strie à une autre sans que la rondelle dépasse au-delà de la surface libre des blocs. La rondelle est percée d'un trou central de forme circulaire et dont le diamètre correspond au moins au diamètre de l'appendice de manière que l'appendice puisse s'insérer dans la rondelle. Lorsque la rondelle glisse le long de l'appendice et qu'elle vient en contact avec les faces latérales des blocs, les stries respectivement de la rondelle et des faces latérales des blocs s'engagent les unes dans les autres et permettent un blocage en translation du dispositif 6 de liaison selon la direction de l'axe X-X qui correspond à la direction suivie par le dispositif de liaison pour engager et dégager les tenons des rainures. Dans la forme de réalisation illustrée, pour permettre un blocage optimisé dans la direction de l'axe X-X, les stries 60 sont dans une direction longitudinale perpendiculaire à la direction de l'axe X-X, direction suivie par le tenon pour se retirer de la rainure.

Un écrou respectivement 70, 72, 74, 76 dont le filetage correspond à celui de l'extrémité respectivement 52, 54, 56, 58 de l'appendice permet par serrage de bloquer la rondelle respectivement 62, 64, 66, 68 contre les faces latérales des blocs.

Comme vu précédemment, les appendices doivent se trouver dans une direction permettant l'association à un dispositif de verrouillage. La direction de chaque appendice est perpendiculaire à la face latérale du bloc correspondant sur lequel l'écrou lié à l'appendice concernée vient appuyer la rondelle.

Un système de freinage peut être ajouté sous la forme par exemple d'écrous auto freinés (70, 72, 74, 76) ou tout autre système connu.

Le système de fixation fonctionne de la manière suivante :
Suivant les pièces à assembler et l'environnement dans lequel elles sont assemblées, la forme du dispositif 6 et la manière de procéder à l'assemblage peuvent être différentes.

Lorsque l'environnement laisse suffisamment de place pour déplacer une pièce 2 par rapport à une autre pièce 4, le dispositif 6 de liaison peut être utilisé sous sa forme d'un seul tenant (forme de réalisation des figures 1 à 3). L'un des tenons du dispositif 6 est inséré dans la rainure d'une ferrure fixée à une première pièce. On déplace ensuite la deuxième pièce pour insérer l'autre tenon resté libre dans la rainure de la ferrure de cette deuxième pièce. Une fois les tenons en place, on procède au verrouillage en position à l'aide des écrous que l'on fait glisser le long du filetage des appendices jusqu'à ce que les stries des rondelles viennent en appui contre les stries des blocs des ferrures. Une fois les écrous serrés et éventuellement freinés, les pièces sont assemblées.

Le dispositif 6 pourrait se présenter en deux parties séparables 12d, 12^{e} mais cette forme de réalisation présente un plus grand intérêt dans le cas suivant :
S'il est difficile de déplacer les pièces l'une par rapport à l'autre, deux procédés d'assemblage à l'aide du système 1 de fixation sont possibles :
- utiliser un dispositif 6 comportant deux parties séparables (forme de réalisation de la figure 4). Dans ce cas on positionne chacune des parties dans la ferrure associée et l'assemblage consiste à joindre les deux parties au niveau de la plaque intercalaire puis les verrouiller sur les ferrures ;
- utiliser le dispositif de liaison sous sa forme d'un seul tenant. Dans ce cas, il est nécessaire qu'au moins une des ferrures, appelée ferrure libre, ne soit pas fixée à la pièce correspondante pour que le dispositif puisse être monté. Si la ferrure est déjà fixée, il est possible de la démonter pour effectuer l'assemblage. On commence par mettre en place l'un des tenons dans la ferrure fixée sur l'une des pièces. Il se peut que les deux ferrures ne soit pas en place auquel cas on commence par fixer la ferrure. On insère le tenon dans la ferrure soit avant fixation soit après fixation. Une fois le tenon en position, on fait glisser la ferrure libre depuis les faces latérales de l'autre tenon pour que les blocs viennent se positionner autour de cet autre tenon puis on procède à la fixation de la ferrure sur la pièce correspondante. On finalise l'assemblage en verrouillant le dispositif sur les ferrures. On pourrait également placer les ferrures autour des tenons, positionner l'ensemble entre les deux pièces et fixer ensuite les deux ferrures sur les pièces correspondantes.

Il est possible d'utiliser plusieurs dispositifs de liaison pour réaliser un assemblage. Dans ce cas, les ferrures associées à une même pièce peuvent être toute équivalente ou présenter des différences notamment dans l'orientation des rainures. Dans le cas de ferrures à rainures orientées différemment, il est possible d'alterner entre une ferrure dont la rainure présente une direction orthogonale à la ferrure voisine et ainsi de suite. Dans le cas de pièces se trouvant dans un référentiel terrestre où la direction verticale correspond à la direction perpendiculaire au sol, les ferrures peuvent présenter de manière alternée une rainure à +45 degrés par rapport à la verticale et une rainure à -45 degrés par rapport à la verticale.

De manière à reprendre des tolérances de montage, de positionnement, d'usinage ou des défauts lors de l'assemblage, il est possible de jouer séparément ou de manière combinée sur les différents éléments prévus au niveau du dispositif 6 de liaison suivants :
- le débattement possible de l'appendice à l'intérieur de la rainure qui permet de déplacer le dispositif dans la direction de l'axe Z-Z ou Y-Y ;
- le déplacement d'une strie à une autre de la rondelle sur le bloc qui permet de déplacer le dispositif dans la direction de l'axe X-X ;
- la convexité des faces latérales du tenon qui permet d'assurer un défaut d'orthogonalité des ferrures ;
- dans le cas où le dispositif comprend une partie élastique, cette partie permet d'absorber des défauts dans toutes les directions et par exemple un défaut d'orientation relative entre les rainures des ferrures associées.

Le système 1 de fixation assure ainsi un montage sans contrainte du fait de tous les réglages et ajustements possibles.

Le système 1 de fixation en plus d'assurer toutes ces reprises, permet la transmission des efforts dans l'ensemble des directions parallèles aux axes X-X, Y-Y et Z-Z. La transmission des efforts dans la direction des axes Y-Y et Z-Z est assuré par les tenons 18, respectivement 20 et les rainures 22, respectivement 24 et la transmission des efforts en X-X par les stries 60, les rondelles et les appendices du dispositif 6. Les éléments constitutifs du système 1 de fixation peuvent être orientés en fonction des efforts à passer. Dans la forme illustrée, les tenons sont décalés de sensiblement 90 degrés.

Le système de fixation peut être utilisé dans des applications diverses et variées pour permettre la fixation d'une structure à une autre de tout type. Dans le monde aéronautique notamment, le système peut être utilisé par exemple pour fixer un meuble électrique, un galet, un bloc hydraulique ou autre à la structure primaire d'un aéronef. Comme vu plus haut, selon un autre exemple possible, le système pourrait être également utilisé pour fixer le plancher au fuselage. Le système peut être utilisé dans tout autre domaine technique sans limitation. Quel que soit le domaine technique et l'utilisation qui en est faite, le système de fixation apporte comme avantage la transmission des efforts dans trois directions différentes, la reprise des tolérances de montage, de positionnement et d'usinage dans les trois directions. Il permet de monter et démonter très facilement très rapidement et sans usinage, ni perçage, ni calage une structure sur une autre. Il n'est plus nécessaire de prévoir des équipements interchangeables pour des raisons de fixation : il est possible de changer une pièce par une autre et de conserver le même système de fixation sans avoir un seul ré ajustage. Lorsque le dispositif comprend une partie élastique, le système de fixation permet de filtrer les vibrations communiquées par les pièces à assembler.

## Revendications

1. Dispositif (6) de liaison mécanique entre deux pièces (2, 4) **caractérisé en ce qu'**il comprend deux tenons (18, 20) s'étendant chacun depuis des faces opposées d'une plaque (12) intercalaire, chacun des tenons présentant deux appendices (30, 32), (34, 36) formant bras de couplage, chaque appendice étant positionné de part et d'autre du tenon, les appendices d'un tenon étant positionnées dans une direction longitudinale différente des appendices de l'autre tenon, chacun des appendices présentant des moyens de couplage à un dispositif (37) de verrouillage des tenons.

2. Dispositif de liaison mécanique selon la revendication 1, **caractérisé en ce que** les appendices d'un tenon se trouvent dans des directions longitudinales formant un angle de sensiblement 90 degrés avec les appendices de l'autre tenon.

3. Dispositif selon l'une des revendications 1 ou 2, **caractérisé en ce que** la plaque (12) intercalaire comprend une partie (12a) élastique.

4. Dispositif selon la revendication 3, **caractérisé en ce que** la partie (12a) élastique est prise en sandwich entre deux parties (12b, 12c) plus rigides.

5. Dispositif de liaison mécanique selon l'une des revendications 1 ou 4, **caractérisé en ce que** les moyens de couplage se présentent sous la forme d'un filetage des appendices.

6. Dispositif de liaison mécanique selon l'une des revendications 1 à 5, **caractérisé en ce que** la plaque (12) intercalaire est en deux parties (12d, 12e) séparables.

7. Dispositif de liaison mécanique selon l'une des revendications 1 à 6, **caractérisé en ce que** chaque tenon (18, 20) se présente sous une forme parallélépipédique et chaque appendice (30, 32, 34, 36) sous une forme cylindrique.

8. Système de fixation comprenant un dispositif (6) de liaison mécanique selon l'une des revendications 1 à 7 et deux ferrures (8, 10) présentant chacune une rainure (22, 24) dans laquelle chacun des tenons (18, 20) du dispositif de liaison est susceptible de s'engager, chaque appendice (30, 32, 34, 36) dépassant à l'extérieur et de part et d'autre de la rainure, la rainure d'une ferrure étant positionnée selon une direction longitudinale différente de la rainure de l'autre ferrure.

9. Système de fixation selon la revendication 8, **caractérisé en ce que** la rainure (22, 24) est formée par une cavité (38, 40) entre deux blocs (42, 44), (46, 48) faisant saillie par rapport à la ferrure (8, 10).

10. Système de fixation selon la revendication 9, **caractérisé en ce que** chaque bloc présente une face latérale (42e, 44e, 42f, 44f) sur laquelle s'appuie une rondelle (62, 64, 66, 68), la face latérale présentant au moins partiellement des stries (60) de forme correspondante à celle de la rondelle.

11. Système de fixation selon la revendication 10, **caractérisé en ce que** chaque appendice se trouve dans une direction perpendiculaire aux faces latérales des blocs desquels elle dépasse.

12. Système de fixation selon la revendication 11, **caractérisé en ce que** un écrou (70, 72, 74, 76) est prévu par appendice pour verrouiller la rondelle sur une face latérale des blocs correspondants.

13. Ensemble de deux pièces (2, 4) pourvues d'un système de fixation selon l'une des revendications 8 à 12, **caractérisé en ce que** sur une même pièce, l'orientation de la rainure présente une direction alternée d'une ferrure à la ferrure voisine.

14. Procédé de fixation de deux pièces (2, 4) l'une à l'autre à l'aide d'un système de fixation selon l'une des revendications 8 à 12, **caractérisé en ce qu'**il comprend les étapes suivantes :
- positionner un tenon (18, 20) dans une ferrure (8, 10) ou inversement ;
- positionner l'autre tenon dans l'autre ferrure ou inversement ;
- fixer les ferrures sur les pièces correspondantes, la fixation de la ferrure pouvant intervenir avant ou après le positionnement du tenon ;
- verrouiller les tenons sur les ferrures à l'aide du dispositif (37) de verrouillage.

15. Procédé de fixation selon la revendication 14, **caractérisé en ce qu'**il comprend une étape d'assemblage des parties (12d) et (12e) séparables de la plaque (12) intercalaire du dispositif de liaison selon la revendication 6.

## Patentansprüche

1. Mechanische Verbindungsvorrichtung (6) zwischen zwei Teilen (2, 4), **dadurch gekennzeichnet, dass** sie zwei Zapfen (18, 20) umfasst, die sich jeweils von entgegengesetzten Seiten einer Zwischenplatte (12) aus erstrecken, wobei jeder der Zapfen zwei Fortsätze (30, 32), (34, 36) aufweist, die Koppelarme bilden, wobei jeder Fortsatz beidseits des Zapfens angeordnet ist, wobei die Fortsätze eines Zapfens in einer anderen Längsrichtung als die Fortsätze des anderen Zapfens angeordnet sind, wobei jeder der Fortsätze Mittel zum Koppeln mit einer Vorrichtung (37) zur Verriegelung der Zapfen aufweist.

2. Mechanische Verbindungsvorrichtung nach Anspruch 1, **dadurch gekennzeichnet, dass** die Fortsätze eines Zapfens sich in Längsrichtungen befinden, die einen Winkel von etwa 90 Grad mit den Fortsätzen des anderen Zapfens bilden.

3. Vorrichtung nach einem der Ansprüche 1 oder 2, **dadurch gekennzeichnet, dass** die Zwischenplatte (12) einen elastischen Abschnitt (12a) umfasst.

4. Vorrichtung nach Anspruch 3, **dadurch gekennzeichnet, dass** der elastische Abschnitt (12a) sandwichartig zwischen zwei steiferen Abschnitten (12b, 12c) aufgenommen ist.

5. Mechanische Verbindungsvorrichtung nach einem der Ansprüche 1 oder 4, **dadurch gekennzeichnet, dass** die Koppelmittel in Form eines Gewindes der Fortsätze vorliegen.

6. Mechanische Verbindungsvorrichtung nach einem der Ansprüche 1 bis 5, **dadurch gekennzeichnet, dass** die Zwischenplatte (12) aus zwei trennbaren Abschnitten (12d, 12e) besteht.

7. Mechanische Verbindungsvorrichtung nach einem der Ansprüche 1 bis 6, **dadurch gekennzeichnet, dass** jeder Zapfen (18, 20) in einer parallelepipedischen Form und jeder Fortsatz (30, 32, 34, 36) in einer zylindrischen Form vorliegt.

8. Befestigungssystem, umfassend eine mechanische Verbindungsvorrichtung (6) nach einem der Ansprüche 1 bis 7 und zwei Beschläge (8, 10), die jeweils eine Nut (22, 24) aufweisen, in die jeder der Zapfen (18, 20) der Verbindungsvorrichtung eingeführt werden kann, wobei jeder Fortsatz (30, 32, 34, 36) außen und beidseits der Nut übersteht, wobei die Nut eines Beschlags in einer anderen Längsrichtung als die Nut des anderen Beschlags angeordnet ist.

9. Befestigungssystem nach Anspruch 8, **dadurch gekennzeichnet, dass** die Nut (22, 24) durch einen Hohlraum (38, 40) zwischen zwei Blöcken (42, 44), (46, 48) gebildet wird, die in Bezug auf den Beschlag (8, 10) vorspringen.

10. Befestigungssystem nach Anspruch 9, **dadurch gekennzeichnet, dass** jeder Block eine Seitenfläche (42e, 44e, 42f, 44f) aufweist, auf der eine Scheibe (62, 64, 66, 68) aufliegt, wobei die Seitenfläche zumindest teilweise Riefen (60) mit einer zu der der Scheibe korrespondierenden Form aufweist.

11. Befestigungssystem nach Anspruch 10, **dadurch gekennzeichnet, dass** sich jeder Fortsatz in einer Richtung senkrecht zu den Seitenflächen der Blöcke, über die er hinausragt, befindet.

12. Befestigungssystem nach Anspruch 11, **dadurch gekennzeichnet, dass** eine Mutter (70, 72, 74, 76) je Fortsatz vorgesehen ist, um die Scheibe auf einer Seitenfläche der entsprechenden Blöcke zu verriegeln.

13. Anordnung aus zwei Teilen (2, 4), die mit einem Befestigungssystem nach einem der Ansprüche 8 bis 12 versehen sind, **dadurch gekennzeichnet, dass** an demselben Teil die Ausrichtung der Nut eine von einem Beschlag zum Nachbarbeschlag abwechselnde Richtung aufweist.

14. Verfahren zum Befestigen von zwei Teilen (2, 4) aneinander mithilfe eines Befestigungssystems nach einem der Ansprüche 8 bis 12, **dadurch gekennzeichnet, dass** es die folgenden Schritte umfasst:
- Anordnen eines Zapfens (18, 20) in einem Beschlag (8, 10) oder umgekehrt;
- Anordnen des anderen Zapfens in dem anderen Beschlag oder umgekehrt;
- Befestigen der Beschläge an den entsprechenden Teilen, wobei das Befestigen des Beschlags vor oder nach dem Anordnen des Zapfens erfolgen kann;
- Verriegeln der Zapfen an den Beschlägen mithilfe der Verriegelungsvorrichtung (37).

15. Befestigungsverfahren nach Anspruch 14, **dadurch gekennzeichnet, dass** es einen Schritt des Zusammenfügens der trennbaren Abschnitte (12d) und (12e) der Zwischenplatte (12) der Verbindungsvorrichtung nach Anspruch 6 umfasst.

## Claims

1. Device (6) for mechanical connection between two parts (2, 4), **characterized in that** it comprises two tenons (18, 20) each extending from opposite faces of a spacer plate (12), each one of the tenons having two appendices (30, 32), (34, 36) forming coupling arms, each appendix being positioned on either side of the tenon, the appendices of one tenon being positioned in a longitudinal direction that is different from that of the appendices of the other tenon, each one of the appendices having means for coupling to a device (37) for locking the tenons.

2. Device for mechanical connection according to Claim 1, **characterized in that** the appendices of a tenon are located in longitudinal directions forming an angle of essentially 90 degrees with the appendices of the other tenon.

3. Device according to one of Claims 1 or 2, **characterized in that** the spacer plate (12) comprises an elastic portion (12a).

4. Device according to Claim 3, **characterized in that** the elastic portion (12a) is sandwiched between two more rigid portions (12b, 12c).

5. Device for mechanical connection according to either of Claims 1 and 4, **characterized in that** the coupling means take the form of threading on the appendices.

6. Device for mechanical connection according to one of Claims 1 to 5, **characterized in that** the spacer plate (12) is in two separable portions (12d, 12e).

7. Device for mechanical connection according to one of Claims 1 to 6, **characterized in that** each tenon (18, 20) takes the form of a parallelepipedal and each appendix (30, 32, 34, 36) takes the form of a cylinder.

8. Attachment system comprising a device (6) for mechanical connection according to one of Claims 1 to 7 and two fittings (8, 10) each having a groove (22, 24) in which each of the tenons (18, 20) of the connection device is able to engage, each appendix (30, 32, 34, 36) extending beyond and on either side of the groove, the groove of one fitting being positioned in a different longitudinal direction from the groove of the other fitting.

9. Attachment system according to Claim 8, **characterized in that** the groove (22, 24) is formed by a cavity (38, 40) between two blocks (42, 44), (46, 48) that project relative to the fitting (8, 10).

10. Attachment system according to Claim 9, **characterized in that** each block has a lateral face (42e, 44e, 42f, 44f) against which a washer (62, 64, 66, 68) presses, the lateral face having, at least partially, ridges (60) whose shape matches that of the washer.

11. Attachment system according to Claim 10, **characterized in that** each appendix is located in a direction perpendicular to the lateral faces of the blocks from which it extends.

12. Attachment system according to Claim 11, **characterized in that** one nut (70, 72, 74, 76) is provided per appendix for the purpose of locking the washer on a lateral face of the corresponding blocks.

13. Assembly of two parts (2, 4) provided with an attachment system according to one of Claims 8 to 12, **characterized in that**, on a given part, the direction of the orientation of the groove alternates from one fitting to the adjacent fitting.

14. Method for attaching two parts (2, 4) to one another using an attachment system according to one of Claims 8 to 12, **characterized in that** it comprises the following steps:
- positioning a tenon (18, 20) in a fitting (8, 10) or vice versa;
- positioning the other tenon in the other fitting or vice versa;
- attaching the fittings to the corresponding parts, wherein attaching the fitting can take place before or after positioning the tenon;
- locking the tenons on the fittings using the locking device (37).

15. Attachment method according to Claim 14, **characterized in that** it comprises a step of assembling the separable portions (12d) and (12e) of the spacer plate (12) of the connection device according to Claim 6.
